# EUROPÄISCHE PATENTSCHRIFT

(11) **EP 2 724 127 B1**
(45) Veröffentlichungstag und Bekanntmachung des Hinweises auf die Patenterteilung: **18.12.2019**
(21) Anmeldenummer: 12729953.5
(22) Anmeldetag: 19.06.2012
(51) Int. Cl.: B06B 1/02, G01H 11/06, G01N 29/24

(54) **KAPAZITIVER ULTRASCHALLWANDLER**
CAPACITIVE ULTRASONIC TRANSDUCER
TRANSDUCTEUR ULTRASONORE CAPACITIF

(30) Priorität: 24.06.2011 AT 9292011
(43) Veröffentlichungstag der Anmeldung: 30.04.2014
(73) Patentinhaber: AVL List GmbH, 8020 Graz (AT)
(72) Erfinder: KUDLATY, Katarzyna, 8042 Graz (AT); WIESINGER, Michael, 8010 Graz (AT); CERNUSCA, Michael, 8111 Judendorf-Strassengel (AT)
(74) Vertreter: Patentanwälte Pinter & Weiss OG
(86) Internationale Anmeldenummer: PCT/EP2012/061702
(87) Internationale Veröffentlichungsnummer: WO 2012/175492

(56) Entgegenhaltungen:
- US-A- 4 081 626
- US-A- 6 026 690
- NIE S H ET AL: "Corrosion of alumina-forming austenitic steel Fe-20Ni-14Cr-3Al-0.6Nb-0.1Ti in supercritical water", JOURNAL OF NUCLEAR MATERIALS, ELSEVIER BV, NL, Bd. 399, Nr. 2-3, 1. April 2010 (2010-04-01), Seiten 231-235, XP007921767, ISSN: 0022-3115, DOI: 10.1016/J.JNUCMAT.2010.01.025 [gefunden am 2010-04-30]
- QIU J H: "Passivity and its breakdown on stainless steels and alloys", SURFACE AND INTERFACE ANALYSIS, HEYDEN AND SON, LONDON, GB, Bd. 33, Nr. 10-11, 1. Januar 2002 (2002-01-01), Seiten 830-833, XP007921766, ISSN: 0142-2421, DOI: 10.1002/SIA.1460 [gefunden am 2002-10-02]

## Beschreibung

Die Erfindung betrifft einen kapazitiven Ultraschallwandler, umfassend einen Sensorkopf mit einer Rückplatte, deren strukturierte Vorderseite mit einer Isolationsschicht und deren Rückseite mit einer Rückelektrode versehen ist, sowie einer darüber montierten Membran als Schallerzeuger, wobei die Membran mit einer Zugspannung in Flächenrichtung beaufschlagt ist.

Heutzutage werden hauptsächlich zwei Arten von Ultraschallsensoren für die Applikationen in der Luft bzw. in Gasumgebungen eingesetzt. Es handelt sich dabei um piezokeramische und/oder kapazitiven Ultraschallsensoren. Beide Arten können, abgesehen von den Unterschieden im Funktionsprinzip und der akustischen Charakteristik, nur bei moderaten Temperaturen und nicht aggressiven Medien ihren Einsatz finden.

Es gibt durchaus Applikationen mit höheren Temperaturen wo bisher keine Messtechnik eingesetzt werden konnte, z.B. bei der Entwicklung der Verbrennungskraftmaschinen. Die Abgastemperaturen können in diesem Fall je nach Betriebszustand der und Position des Durchflusssensors im Abgasstrang von -40°C (z.B. beim Kaltstart des Motors in der Klimakammer) bis etwa 1000°C betragen. Entscheidend ist auch die Tatsache, dass die Abgastemperatur einer Verbrennungskraftmaschine sich schnell und stark ändern kann, z.B. beim Lastwechsel vom Motorbetrieb bei Volllast in den Schleppbetrieb. Die verwendete Sensorik soll dieser extremen Temperaturwechselbelastung standhalten können.

Die piezokeramischen Ultraschallsensoren (letzte Entwicklungen veröffentlicht beispielsweise in der DE 10040344, DE 4434692, DE 102006026674, DE 102008027970, DE 102009032809 und DE 202004002107) können nur bei Temperaturen unter 350°C eingesetzt werden. Diese Begrenzung ergibt sich aus der Curie-Temperatur der verwendeten Piezokristalle, die nach Überschreitung der Temperatur ihre Piezoeigenschaften verlieren. Die dauerhafte Temperaturwechselbelastung kann bei diesen Sensoren zur Materialermüdung (dauerhaften Zerstörung der Piezokristalle) führen.

Auch herkömmliche kapazitive Ultraschallwandler besitzen nicht die gewünschte Temperaturbeständigkeit. Ihre über ein elektrisch leitendes Substrat gespannte metallisch beschichtete Membrane bildet gleichzeitig die Isolationsschicht einer elektrischen Kapazität, wobei die als dielektrisches Membranmaterial üblicherweise verwendeten Kunststofffolien oder auch Membranen aus Siliziumnitrid den Temperaturanforderungen nicht genügen können, wie etwa in D.A.Hutchins, D.W.Schindel, A.G.Bashford, and W.M.D.Wright, "Advances in ultrasonic electrostatic transduction", Elsevier Ultrasonics, Vol. 36, 1998, erläutert ist. Auch bei Verwendung rein metallischer Membrane tritt die Oxidation schon bei Temperaturen höher als 300°C auf, die bei der geringen Materialdicke einer Wandlermembran zu deren schnellen Zerstörung führt.

Zusätzlich zu der thermischen Beständigkeit der Membran sind auch die thermischen Beständigkeiten der üblichen Isolationsschichten und der Elektroden nicht ausreichend hoch. Durch die hohe Temperatur werden unter anderem elektrische Durchschläge in der Isolationsschicht begünstigt, die zu einer dauerhaften Zerstörung der Sensoren führen. Dem zu Grunde liegt die temperaturbedingte Umstrukturierung bzw. Rekristallisierung der Isolationsschicht. Im Fall der Rückelektrode wird die Diffusion der Metallschicht in den Siliziumkristall durch die hohe Temperatur beschleunigt. Diese führt nach einer gewissen Zeit zu vollständigem Verschwinden der Elektrode. Bei der thermischen Wechselbelastung kommt es, durch schlechte Anpassung der thermischen Ausdehnungskoeffizienten, zum Abplatzen der Isolationsschicht von Trägermaterial oder zum Herausziehen der Membrane aus dem Sensorgehäuse, was die Zerstörung des Sensors bedeutet.

Bezüglich der Montage der Sensormembran zeigt die US 4,081,626 A eine Montageart bei welcher eine Art "Lackdosenverschluss" genutzt wird, wobei eine Nut an einem Basiselement und eine Nase an einer Abdeckplatte miteinander zusammenwirken und die Membran entsprechend geklemmt wird. Die Aufgabe der Erfindung ist ein verbesserter Aufbau eines Ultraschallwandlers, mit dem eine erhöhte Temperaturbeständigkeit bis zu einigen hundert Grad Celsius auch in stark oxidierenden und reduzierenden Medien erzielt werden kann.

Zur Lösung dieser Aufgabe ist der Wandler erfindungsgemäß dadurch gekennzeichnet, dass der Ultraschallwandler zumindest ein Ring umfasst, wobei die Membran mit dem zumindest einen Ring verschweißt und am zumindest einen Ring so befestigt ist, dass die Membran mit einer Zugspannung in Flächenrichtung beaufschlagbar ist.

Vorteilhafterweise ist vorgesehen, dass das Material der Membran aus der Gruppe der Ni-Cr Legierungen, austenitischen Stähle, ferritischen Stähle oder "Superalloys" ausgewählt ist.

Insbesondere ist es dabei von Vorteil, wenn die Membran aus einem Material mit einem Chromgehalt von zumindest 16% und einem Aluminiumgehalt von zumindest 1% besteht.

Zur Lösung der eingangs gestellten Aufgabe ist auch eine Ausführungsform geeignet, bei welcher die Isolationsschicht aus einem Material mit amorpher Struktur besteht.

Vorzugsweise ist dabei vorgesehen, dass die Isolationsschicht aus mehreren amorphen Schichten besteht.

Die eingangs gestellte Aufgabe wird auch durch die erfindungsgemäßen Merkmale gelöst, dass die Rückelektrode eine mehrschichtige Struktur aufweist wobei zumindest eine Schicht eine Diffusionsbarriere zum Grundmaterial der Rückplatte bildet, sowie die Oberflächenschicht aus Platin besteht.

Vorteilhafterweise ist weiters vorgesehen, dass der Sensorkopf als unabhängig vom Rest des Ultraschallwandlers austauschbare Baugruppe ausgeführt ist.

Eine vorteilhafte Ausführungsform eines erfindungsgemäßen Ultraschallwandlers ist dadurch gekennzeichnet, dass eine Heizvorrichtung für die Schallabstrahlfläche vorgesehen ist.

Eine weiter vorteilhafte Ausführungsform eines erfindungsgemäßen Ultraschallwandlers ist dadurch gekennzeichnet, dass die Bereiche oberhalb und unterhalb der Membran durch Kanäle im Wandler verbunden sind.

Dabei sind vorteilhafterweise Filter in den Kanälen vorgesehen.

Ein weiteres Merkmal der Erfindung kann darin bestehen, dass die Kontaktierung der Rückplatte des Sensorkopfes über einen gefederten Stift bewerkstelligt ist.

Dabei ist vorteilhafterweise zwischen dem Stift und der Rückplatte eine metallische Zwischenplatte eingesetzt.

Durch die obigen Merkmale und die gezielte Materialwahl ist eine Temperaturbeständigkeit bis zu einigen hundert Grad Celsius auch in stark oxidierenden und reduzierenden Medien zu erreichen. Im unteren Temperaturbereich wird die Funktionsfähigkeit des Wandlers durch den Einsatz der Wandlerheizung zur Vermeidung der Kondensatbildung gewährleistet. Durch diese speziellen Eigenschaften kann der Ultraschallwandler überall dort eingesetzt werden wo übliche am Markt verfügbare Technologie ihre Grenzen findet. Ein Beispiel dafür können Ultraschalldurchflussmessgeräte zur Prozesskontrolle in der chemischen oder Lebensmittelindustrie sein, Sensoren zur präzisen Gasmengenmessung auf Off-Shores und in Pipelines, oder auch bei der Entwicklung von Verbrennungskraftmaschinen.

In der nachfolgenden Beschreibung soll die Erfindung beispielhaft und unter Bezugnahme auf die beigefügten Zeichnungen bevorzugter Ausführungsbeispiele näher erläutert werden.

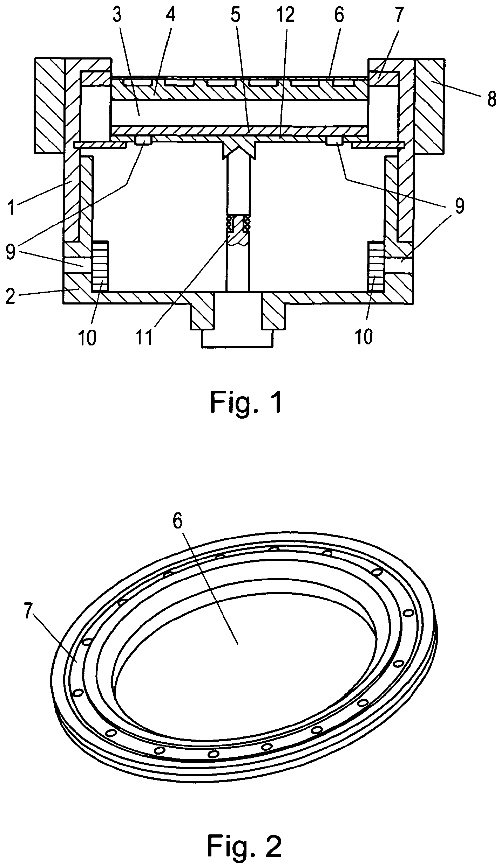

Dabei zeigt die Fig. 1 einen Schnitt durch einen erfindungsgemäßen Ultraschallwandler und Fig. 2 ist eine perspektivische Ansicht einer erfindungsgemäßen Ausführungsform einer vorgespannten Membran für einen derartigen Wandler.

Der im Folgenden dargestellte Ultraschallsensor ist durch seine ausgezeichnete Temperatur-, Oxidations- und Korrosionsbeständigkeit gekennzeichnet und wurde für eine breite Palette an Einsatzgebieten mit hohen mechanischen, thermischen und chemischen Beanspruchungen entwickelt. Wie in Fig. 1 zu erkennen ist, besteht der Sensorkopf aus einem Gehäuseoberteil 1 und einem Gehäuseunterteil 2, welche beiden Teile 1, 2 miteinander verschraubt sind, gegebenenfalls auch anders miteinander verbunden sein können. Eine Rückplatte 3 weist eine Vorderseite mit einer strukturierten Isolationsschicht 4 sowie eine auf der Rückseite aufgebrachte Rückelektrode 5 auf. Dabei ist die Isolationsschicht 4 aus einem Material mit amorpher Struktur angefertigt, vorzugsweise auch aus mehreren amorphen Schichten. Die Rückelektrode 5 selbst kann auch eine mehrschichtige Struktur aufweisen, wobei zumindest eine Schicht eine Diffusionsbarriere zum Grundmaterial der Rückplatte 3 bildet. Weiters kann eine Oberflächenschicht aus Platin vorgesehen sein.

Die Membran 6 des erfindungsgemäßen Ultraschallwandlers ist in einem Aufspannring 7 befestigt, wie auch in Fig. 2 zu erkennen ist. Durch diese Art der Aufspannung der Membran 6 kann diese mit einer Zugspannung in Flächenrichtung beaufschlagt werden. Konkret ist der erfindungsgemäße Ultraschallwandler mit einer mit mindestens einem Ring 7 verschweißten Membran 6 vorgesehen. Die Membran wird typischerweise aus einer Ni-Cr-Legierung, aus einem austenitischen Stahl, einem ferritischen Stahl oder einem "Superalloys" angefertigt sein, wobei vorteilhafterweise der Chromgehalt zumindest 16% und der Aluminiumgehalt zumindest 1% betragen wird.

Zur Vermeidung von Kondensation beim Betrieb bei niedrigen Temperaturen ist eine das Gehäuseoberteil 1 des Ultraschallwandlers umgebende Heizvorrichtung 8 vorgesehen, die insbesondere die Schallabstrahlfläche auf der gewünschten Temperatur hält.

Kanäle 9, vorzugsweise mit Filtern 10, sind für die Verbindung der Bereiche oberhalb und unterhalb der Membran 6 sowohl im Gehäuse, insbesondere im Gehäuseunterteil 2, als auch in einer hinteren Kontaktierungsplatte 12 auf der Rückseite der Rückplatte 3 und der Rückelektrode 5 vorgesehen. An der Kontaktierungsplatte 12 liegt ein gefederter Stift 11 an, um die elektrische Kontaktierung der Rückplatte 3 des Sensorkopfes zu bewerkstelligen.

Vorteilhafterweise ist der Sensorkopf als unabhängig vom Rest des Ultraschallwandlers austauschbare Baugruppe ausgeführt.

## Patentansprüche

1. Kapazitiver Ultraschallwandler, umfassend einen Sensorkopf mit einer Rückplatte (3), deren strukturierte Vorderseite mit einer Isolationsschicht (4) und deren Rückseite mit einer Rückelektrode (5) versehen ist, sowie einer darüber montierten Membran (6) als Schallerzeuger, wobei die Membran (6) mit einer Zugspannung in Flächenrichtung beaufschlagt ist **dadurch gekennzeichnet, dass** der Ultraschallwandler zumindest einen Ring (7) umfasst, wobei die Membran (6) mit dem zumindest einen Ring verschweißt und am zumindest einen Ring so befestigt ist, dass die Membran mit einer Zugspannung in Flächenrichtung beaufschlagbar ist.

2. Ultraschallwandler nach Anspruche 1, **dadurch gekennzeichnet, dass** das Material der Membran (6) aus der Gruppe der Ni-Cr Legierungen, austenitischen Stähle, ferritischen Stähle oder Superalloys ausgewählt ist.

3. Ultraschallwandler nach Anspruch 2, **dadurch gekennzeichnet, dass** die Membran (6) aus einem Material mit einem Chromgehalt von zumindest 16% und einem Aluminiumgehalt von zumindest 1% besteht.

4. Ultraschallwandler nach Anspruch 1, **dadurch gekennzeichnet, dass** die Isolationsschicht (4) aus einem Material mit amorpher Struktur besteht.

5. Ultraschallwandler nach Anspruch 4, **dadurch gekennzeichnet, dass** die Isolationsschicht (4) aus mehreren amorphen Schichten besteht.

6. Ultraschallwandler nach Anspruch 1, **dadurch gekennzeichnet, dass** die Rückelektrode (5) eine mehrschichtige Struktur aufweist wobei zumindest eine Schicht eine Diffusionsbarriere zum Grundmaterial der Rückplatte (3) bildet, sowie eine Oberflächenschicht der Rückelektrode (5) aus Platin besteht.

7. Ultraschallwandler nach Anspruch 1, **dadurch gekennzeichnet, dass** der Sensorkopf als unabhängig vom Rest des Ultraschallwandlers austauschbare Baugruppe ausgeführt ist.

8. Ultraschallwandler nach einem der Ansprüche 1 bis 7, **dadurch gekennzeichnet, dass** eine Heizvorrichtung (8) für die Schallabstrahlfläche des Ultraschallwandlers vorgesehen ist.

9. Ultraschallwandler nach einem der Ansprüche 1 bis 8, **dadurch gekennzeichnet, dass** die Bereiche oberhalb und unterhalb der Membran (6) durch Kanäle (9) im Wandler verbunden sind.

10. Ultraschallwandler nach Anspruch 9, **dadurch gekennzeichnet, dass** in den Kanälen (9) Filter (10) vorgesehen sind.

11. Ultraschallwandler nach einem der Ansprüche 1 bis 10, **dadurch gekennzeichnet, dass** die elektrische Kontaktierung der Rückplatte (3) des Sensorkopfes über einen gefederten Stift (11) bewerkstelligt ist.

12. Ultraschallwandler nach Anspruch 11, **dadurch gekennzeichnet, dass** zwischen dem gefederten Stift (11) und der Rückplatte (3) eine metallische Kontaktierungsplatte (12) eingesetzt ist.

## Claims

1. A capacitive ultrasonic transducer, comprising a sensor head having a back plate (3), the structured front side of which is provided with an insulating layer (4) and the back side of which is provided with a back electrode (5), and a membrane (6) that serves as a sound generator and is mounted over said back plate, wherein the membrane (6) is subjected to tensile stress in the planar direction, **characterized in that** the ultrasonic transducer comprises at least one ring, wherein the Membrane (6) is welded to the at least one ring and mounted so that the membrane is subjectable to a tensile stress in the planar direction.

2. The ultrasonic transducer according to claim 1, **characterized in that** the material of the membrane (6) is selected from the group of Ni-Cr alloys, austenitic steels, ferritic steels or super alloys.

3. The ultrasonic transducer according to claim 2, **characterized in that** the membrane (6) consists of a material having a chromium content of at least 16% and an aluminum content of at least 1%.

4. The ultrasonic transducer according to claim 1, **characterized in that** the insulation layer (4) consists of a material having an amorphous structure.

5. The ultrasonic transducer according to claim 4, **characterized in that** the insulation layer (4) consists of a plurality of amorphous layers.

6. The ultrasonic transducer according to claim 1, **characterized in that** the back electrode (5) has a multi-layered structure, wherein at least one layer forms a diffusion barrier to the base material of the back plate (3), and one surface layer of the back electrode (5) consists of platinum.

7. The ultrasonic transducer according to claim 1, **characterized in that** the sensor head is designed as an assembly that can be replaced independently of the remaining ultrasonic transducer.

8. The ultrasonic transducer according to any one of the preceding claims 1 to 7, **characterized in that** a heating device (8) for the sound-radiating surface of the ultrasonic transducer is provided.

9. The ultrasonic transducer according to any one of the claims 1 to 8, **characterized in that** the regions above and below the membrane (6) are connected by channels (9) within the transducer.

10. The ultrasonic transducer according to claim 9, **characterized in that** filters (10) are provided in the channels (9).

11. The ultrasonic transducer according to any one of the claims 1 to 10, **characterized in that** electronic contacting the back plate (3) of the sensor head is carried out via a spring-loaded pin (11).

12. The ultrasonic transducer according to claim 11, **characterized in that** a metallic contacting plate (12) is inserted between the spring-loaded pin (11) and the back plate (3).

## Revendications

1. Transducteur ultrasonore capacitif, comprenant une tête de capteur ayant une plaque arrière (3) dont la face avant à motifs est munie d'une couche d'isolation (4) et la face arrière est munie d'une électrode arrière (5), ainsi qu'une membrane (6) montée au-dessus de celle-ci comme générateur de son, la membrane (6) étant soumise à une contrainte de traction dans la direction de la surface, **caractérisé en ce que** le transducteur ultrasonore comprend au moins une bague (7), la membrane (6) étant soudée à l'au moins une bague et étant fixée à l'au moins une bague de sorte que la membrane peut être soumise à une contrainte de traction dans la direction de la surface.

2. Transducteur ultrasonore selon la revendication 1, **caractérisé en ce que** le matériau de la membrane (6) est choisi dans le groupe des alliages Ni-Cr, des aciers austénitiques, des aciers ferritiques ou des superalliages.

3. Transducteur ultrasonore selon la revendication 2, **caractérisé en ce que** la membrane (6) est constituée d'un matériau ayant une teneur en chrome d'au moins 16 % et une teneur en aluminium d'au moins 1 %.

4. Transducteur ultrasonore selon la revendication 1, **caractérisé en ce que** la couche d'isolation (4) est constituée d'un matériau ayant une structure amorphe.

5. Transducteur ultrasonore selon la revendication 4, **caractérisé en ce que** la couche d'isolation (4) est constituée de plusieurs couches amorphes.

6. Transducteur ultrasonore selon la revendication 1, **caractérisé en ce que** l'électrode arrière (5) présente une structure multicouche, au moins une couche formant une barrière de diffusion du matériau de base de la plaque arrière (3), et une couche de surface de l'électrode arrière (5) étant constituée de platine.

7. Transducteur ultrasonore selon la revendication 1, **caractérisé en ce que** la tête de capteur est conçue comme un ensemble échangeable indépendamment de la partie restante du transducteur ultrasonore.

8. Transducteur ultrasonore selon l'une des revendications 1 à 7, **caractérisé en ce qu'**un dispositif de chauffage (8) est prévu pour la surface d'émission d'ultrasons du transducteur ultrasonore.

9. Transducteur ultrasonore selon l'une des revendications 1 à 8, **caractérisé en ce que** les zones situées au-dessus et en dessous de la membrane (6) sont reliées par des canaux (9) situés dans le transducteur.

10. Transducteur ultrasonore selon la revendication 9, **caractérisé en ce que** des filtres (10) sont prévus dans les canaux (9).

11. Transducteur ultrasonore selon l'une des revendications 1 à 10, **caractérisé en ce que** la mise en contact électrique de la plaque arrière (3) de la tête de capteur est réalisée par l'intermédiaire d'une tige à ressort (11).

12. Transducteur ultrasonore selon la revendication 11, **caractérisé en ce qu'**une languette de contact métallique (12) est insérée entre la tige à ressort (11) et la plaque arrière (3).
